# EUROPEAN PATENT APPLICATION

(11) **EP 1 698 508 A1**
(43) Date of publication of application: **06.09.2006**
(21) Application number: 04807599.8
(22) Date of filing: 22.12.2004
(51) Int. Cl.: B60K 7/00

(54) **IN-WHEEL MOTOR SYSTEM**

(30) Priority: 22.12.2003 JP 2003425668
(71) Applicant: Kabushiki Kaisha Bridgestone, Chuo-ku, Tokyo 104-8340 (JP)
(72) Inventor: SUZUKI, Yasuhiro, K.K. BRIDGESTONETECHNICAL CTR., Kodaira-shi, Tokyo 1878531 (JP); TASHIRO, Katsumi, K.K. BRIDGESTONETECHNICAL CTR., Kodaira-shi, Tokyo 1878531 (JP)
(74) Representative: Whalley, Kevin
(86) International application number: PCT/JP2004/019242
(87) International publication number: WO 2005/061257

(57) **Abstract**

An in-wheel motor 3 and a wheel 2 or a hub 4 are interconnected by a flexible coupling 10 in which a motor-side plate 11A and an intermediate plate 11B are interconnected by a plurality of first slide members 12A, each comprising a roller member 12p moving along a stepped surface 12K formed on the intermediate plate 11B in such a manner that they can move in a predetermined direction (direction A) and the intermediate plate 11B and a wheel-side plate 11C are interconnected by a plurality of second slide members 12B having the same structure as the first slide member 12A in such a manner that they can move in a direction (direction B) orthogonal to the above direction A and which has a small number of parts and is easily assembled. Therefore, even when the motor shaft and the wheel shaft become eccentric to each other, the drive torque of the motor 3 can be transmitted to the wheel 2 without fail and the assembly work efficiency of the in-wheel motor can be enhanced.

## Description

### Background of the Invention

### [Field of the Invention]

The present invention relates to an in-wheel motor system for use in a vehicle having direct drive wheels as drive wheels.

### [Description of the Prior Art]

It is generally known that, in a vehicle having a suspension mechanism such as a spring around a wheel, as the mass of parts under the spring such as a wheel, knuckle and suspension arm, so-called "unsprung mass" increases, changes in the ground holding force of a tire when running on an uneven road become larger, thereby deteriorating road holding properties.

In a vehicle driven by a motor such as an electric car, an in-wheel motor system incorporating a motor in a wheel is being employed. However, in a conventional in-wheel motor whose non-rotating part is fixed to a spindle shaft connected to a part such as an upright or knuckle which is one of the parts around a wheel of the vehicle and whose rotor as a rotating part can rotate together with the wheel, the above unsprung mass increases by the weight of the in-wheel motor, whereby changes in the ground holding force of the tire become large, thereby deteriorating road holding properties (refer to patent documents 1 to 3, for example).

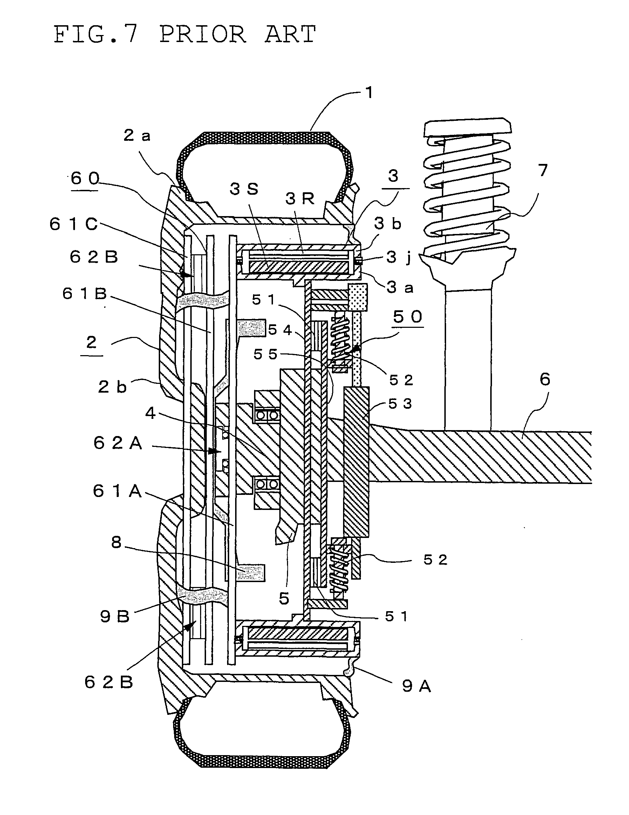

To solve the above problem, there is proposed an in-wheel motor system as shown in Fig. 7 in which a non-rotating side case 3a supporting a stator 3S is elastically supported to a knuckle 5 as a part around the wheel of a vehicle by a buffer mechanism 50 having two plates 54 and 55 whose moving directions are limited to the vertical direction of the vehicle by direct-acting guides 51 and which are interconnected by springs 52 and a damper 53 moving in the vertical direction of the vehicle and a rotating side case 3b supporting a rotor 3R and a wheel 2 are interconnected by a flexible coupling 60 as a drive force transmission mechanism which can become eccentric in the radical direction of the wheel 2 (refer to patent document 4, for example).

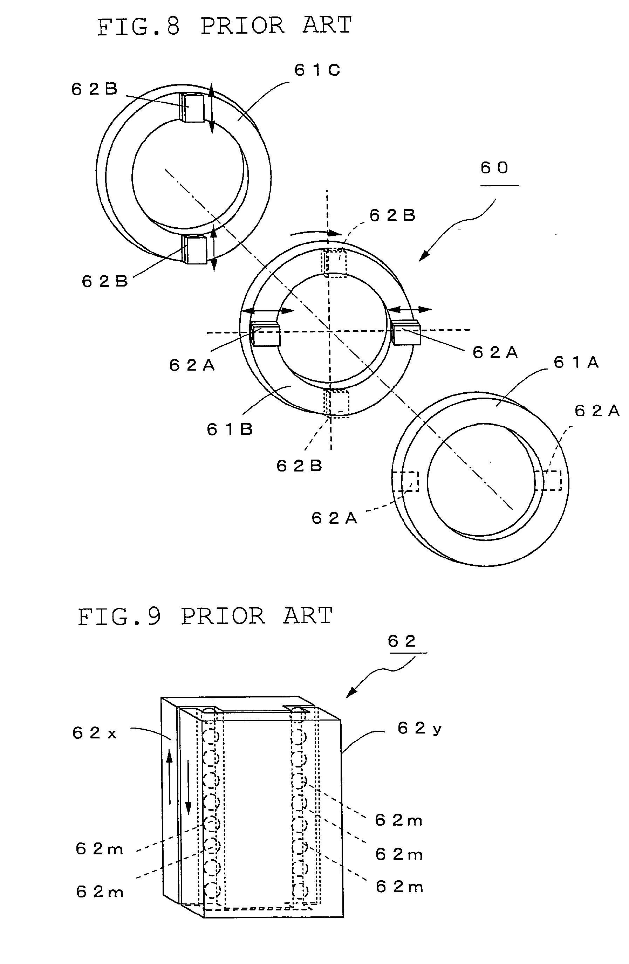

More specifically, as shown in Fig. 8, the above flexible coupling 60 comprises a plurality of hollow disk-like plates 61A to 61C and direct-acting guides 62A and 62B for interconnecting between the adjacent plates 61A and 61B and between the adjacent plates 61B and 61C and guiding the above adjacent plates 61A and 61B and the adjacent plates 61B and 61C in the radial direction of the disk. As shown in Fig. 9, each of the above direct-acting guides 62A and 62B comprises a guide rail 62x having a projection extending in the radial direction of the above plates 61A to 61C, a guide member 62y having a recess extending in the radial direction of the above plates 61A to 61C to be engaged with the above guide rail 62x, and a plurality of steel balls 62m interposed between the projection of the above guide rail 62x and the recess of the guide member 62y to smoothly slide the above guide rail 62x and the guide member 62y.

Since the above guide rail 62x and the guide member 62y slide so as to guide the above adjacent plates 61A and 61B and the adjacent plates 61B and 61C in the radial direction of the disk, the in-wheel motor 3 can move in the working direction of the above direct-acting guides 62A and 62B, that is, the radial direction of the disk but not in the rotation direction. Therefore, by connecting the rotating side case 3b of the motor 3 to the wheel 2 by the above flexible coupling 60, drive torque can be transmitted from the motor 3 to the wheel 2 efficiently.

In the in-wheel motor system constituted as described above, the in-wheel motor 3 is elastically supported to the knuckle 5 which is a part around the wheel of a vehicle to be float mounted to the part by the above buffer mechanism 50 so that the motor 3 itself can be used as the weight of a dynamic damper, thereby making it possible to improve ground holding performance and riding comfort when running on a bad road. Since the motor shaft and the wheel shaft are interconnected by the above flexible coupling 60 in such a manner that they can become eccentric to each other in any direction, torque can be transmitted from the motor 3 to the wheel 2 efficiently.

In the above method, the motor 3 vibrates in the vertical direction independently of the parts around the wheel of the vehicle, a certain measure of spacing is required between the motor 3 and the wheel 2. Therefore, when the vehicle runs on a graveled road and gravel enters this spacing, the motor may be damaged by the vibration of the motor 3 in the wheel 2. To cope with this, the present applicant proposes a method for preventing the entry of a stone or dust into the above spacing by blocking the spacing between the above motor 3 and the wheel 2 from the outside with a first annular dust boot 9A having a wavy section in the direction perpendicular to the shaft and the deformation of a coupling portion by a stepping stone or the entry of dust into the direct-acting guides 62A and 62B by forming a barrier on the inner side of the flexible coupling 60 with a second annular dust boot 9B as shown in Fig. 6 (Japanese Patent Application No. 2002-251401).
Patent document 1: Japanese Patent No. 2676025
Patent document 2: Japanese Examined Patent Publication No. 9-506236
Patent document 3: Japanese Unexamined Patent Application No. 10-305735
Patent document 4: WO 02/083446 A1

### Summary of the Invention

Although the above flexible coupling 60 can transmit the drive torque of the motor 3 to the wheel 2 efficiently, as it has a large number of parts and comprises the direct-acting guides 62A and 62B which require high assembly accuracy, it takes long to mount the above direct-acting guides 62A and 62B to the above plates 61A to 61C, thereby reducing productivity. Further, since the above direct-acting guides 62A and 62B are expensive, the whole system costs dear.

Although grease is filled into the above direct-acting guides 62A and 62B to smoothen their movements and the above dust boots 9A and 9B can prevent the entry of a stone or dust from the outside, the above grease may leak out into the motor 3 from the periphery of the flexible coupling 60.

It is an object of the present invention which has been made in view of the above problem of the prior art to provide an in-wheel motor system capable of transmitting the drive torque of a motor to a wheel very efficiently with simple constitution and comprising a flexible coupling which is easily assembled.

According to a first aspect of the present invention, there is provided an in-wheel motor system having a hollow direct drive motor which is provided in a wheel and whose stator side is supported to a part around the wheel of a vehicle by elastic bodies and/or an attenuation mechanism, wherein
a motor rotor and a wheel or a hub are interconnected by a coupling mechanism which comprises a wheel-side plate connected to the wheel or hub, a motor-side plate connected to the rotating side case of the motor, an intermediate plate interposed between these two plates, and first and second slide members for interconnecting between the wheel-side plate and the intermediate plate and between the intermediate plate and the motor-side plate, each having roller members whose moving directions are limited by guide portions, and arranged in such a manner that their moving directions are orthogonal to each other.

According to a second aspect of the present invention, there is provided an in-wheel motor system, wherein contact portions which extend in the moving directions of the above roller members and are brought into contact with the side faces of the roller members are provided on the intermediate plate to limit the moving directions of the roller members.

According to a third aspect of the present invention, there is provided an in-wheel motor system comprising an elastic annular dust boot for storing the first and second slide members.

According to a fourth aspect of the present invention, there is provided an in-wheel motor system having a hollow direct drive motor which is provided in a wheel and whose stator side is supported to a part around the wheel of a vehicle by elastic bodies and/or an attenuation mechanism, wherein
a motor rotor and a wheel or a hub are interconnected by a coupling mechanism which comprises a wheel-side plate connected to the wheel or hub, a motor-side plate connected to the rotating side case of the motor, an intermediate plate interposed between these two plates, and first and second slide members for interconnecting between the wheel-side plate and the intermediate plate and between the intermediate plate and the motor-side plate, each consisting of linear bearings and a rod, and arranged in such a manner that their moving directions are orthogonal to each other.

According to a fifth aspect of the present invention, there is provided an in-wheel motor system according to claim 4, comprising an elastic annular dust boot for storing the first and second slide members.

According to a sixth aspect of the present invention, there is provided an in-wheel motor system having a hollow direct drive motor which is provided in a wheel and whose stator side is supported to a part around the wheel of a vehicle by elastic bodies and/or an attenuation mechanism and a coupling member having a slide mechanism for connecting the rotor of the motor to the wheel or hub, wherein
an elastic annular dust boot for storing the slide mechanism is provided.

According to the present invention, the rotor of a hollow direct drive motor provided in a wheel and the wheel or the hub are interconnected by a coupling mechanism which comprises first and second slide members for interconnecting between the wheel-side plate and the intermediate plate and between the intermediate plate and the wheel-side plate, having roller members whose moving directions are limited by guide portions and arranged in such a manner that their moving directions are orthogonal to each other. Even when the motor shaft and the wheel shaft become eccentric to each other, the drive torque of the motor can be transmitted to the wheel without fail, the assembly becomes easy and the work efficiency can be improved.

When first and second slide members, each consisting of linear bearings and a rod, are used in place of the above first and second slide members having the above roller members, the same effect can be obtained.

When the motor rotor and the wheel are interconnected by a coupling member having a slide mechanism comprising first and second slide members having the above roller members or first and second slide members, each consisting of linear bearings and a rod, if an elastic annular dust boot for storing the above slide mechanism is provided, the entry of dust or water into the slide mechanism or the diffusion of grease filled into the slide portions of the slide mechanism can be prevented effectively.

### Brief Description of the Drawings

Fig. 1 is a longitudinal sectional view showing the constitution of an in-wheel motor system according to Embodiment 1 of the present invention;
Figs. 2(a) and 2(b) are diagrams showing the constitution of a flexible coupling according to Embodiment 1;
Figs. 3(a) and 3(b) are diagrams showing the constitution of a flexible coupling according to Embodiment 2 of the present invention;
Fig. 4 is a longitudinal sectional view showing the constitution of an in-wheel motor system according to Embodiment 3 of the present invention;
Figs. 5(a) and 5(b) are diagrams showing the operation of a dust boot according to Embodiment 3;
Fig. 6 is a longitudinal section showing the constitution of an in-wheel motor system comprising a flexible coupling and a dust boot according to the present invention;
Fig. 7 is a diagram showing the constitution of a conventional in-wheel motor system of the prior art;
Fig. 8 is a diagram showing the constitution of a conventional flexible coupling of the prior art; and
Fig. 9 is a diagram showing an example of a direct-acting guide.

### Detailed Description of the Preferred Embodiments

Preferred embodiments of the present invention will be described hereinunder with reference to the accompanying drawings.

### Embodiment 1

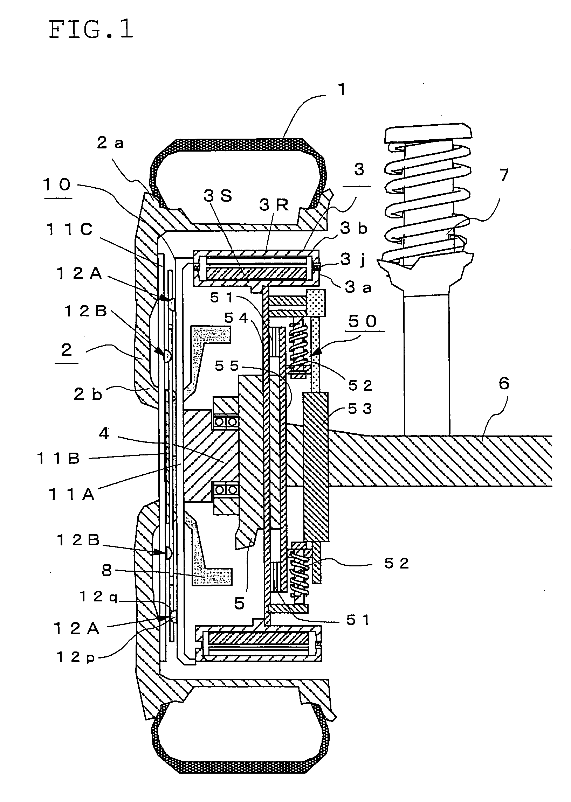

Fig. 1 shows the constitution of an in-wheel motor system according to Embodiment 1 of the present invention. In Fig. 1, reference numeral 1 denotes a tire, 2 a wheel consisting of a rim 2a and a wheel disk 2b, and 3 an outer rotor type in-wheel motor which comprises a stator 3S fixed to a non-rotating side case 3a arranged on the inner side in the radial direction and a rotor 3R fixed to a rotating side case 3b rotatably connected to the above non-rotating side case 3a through a bearing 3j and arranged on the outer side in the radial direction.

Numeral 4 denotes a hub connected to the wheel 2 at its rotary shaft, 5 a knuckle connected to an axle 6, 7 a suspension member composed of a shock absorber, 8 a brake unit composed of a brake disk mounted to the above hub 4, 10 a flexible coupling comprising a plurality of slide members 12A and 12B having roller members 12p which are mounted on the opposed surfaces of a motor-side plate 11A and a wheel-side plate 11C in such a manner that their moving directions become orthogonal to each other, and 50 a buffer mechanism for elastically supporting the non-rotating side case 3a supporting the stator 3 to the above knuckle 5 as a part around the wheel of the vehicle, comprising two plates 54 and 55 whose moving directions are limited to the vertical direction of the vehicle by direct-acting guides 51 and which are interconnected by springs 52 and a damper 53 moving in the vertical direction of the vehicle.

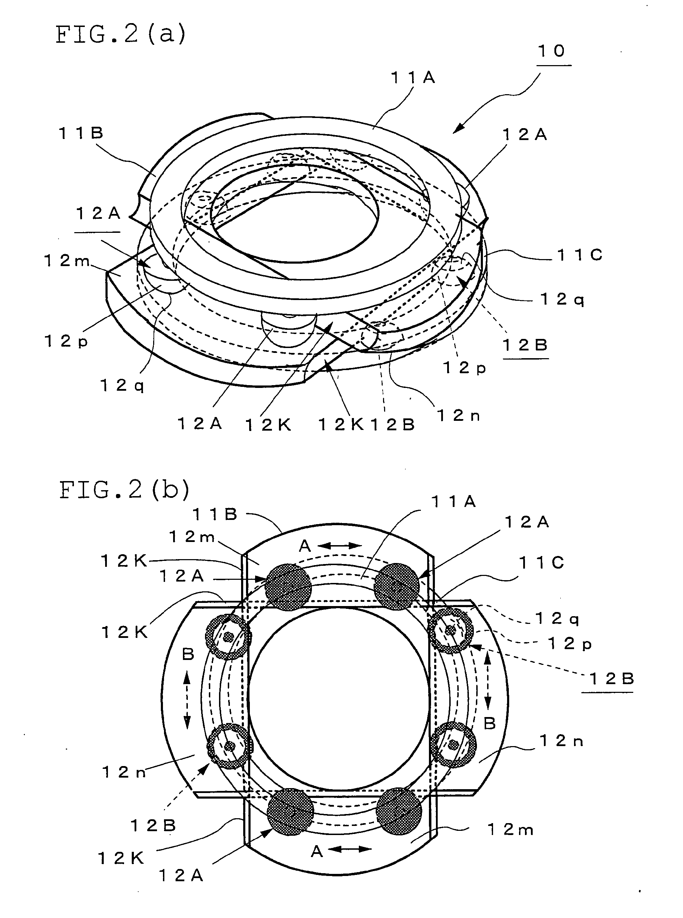

As shown in Figs. 2 (a) and 2 (b), the above flexible coupling 10 is constituted such that a pair of roller members 12p and 12p having a convex portion forming part of a spherical surface and constituting first slide members 12A are mounted in a direction parallel to the direction A on the opposite sides in the circumferential direction of the motor-side plate 11A, a pair of roller members 12p and 12p constituting second slide members 12B are mounted in a direction parallel to the direction B orthogonal to the above direction A on the wheel-side plate 11C at positions 90° shifted from the positions of the above roller members 12p, and guide grooves 12q having a concave portion corresponding to the convex portions of the roller members 12p of the first and second slide members 12A and 12B are formed on the front and rear surfaces opposed to the above roller members 12p of the intermediate plate 11B. The end portions of the roller members 12p are rotatably stored in the above guide grooves 12q. A stepped portion 12m is formed on the motor-side plate 11A side of the above intermediate plate 11B, the above guide grooves 12q are formed in this stepped portion 12m, a stepped portion 12n is also formed on the wheel-side plate 11C side of the intermediate plate 11B, the above guide grooves 12q are formed in this stepped portion 12n, the sectional form of a stepped surface 12K between the above stepped portion 12m and the motor-side plate 11A side of the intermediate plate 11B extending in the above direction A and the sectional form of a stepped surface 12K between the above stepped portion 12n and the wheel-side plate 11C side of the above intermediate plate 11B extending in the direction B are made corresponding to the shape of the above roller members 12p, for example, a curve having the same curvature as that of the above roller members 12p, and the above roller members 12p and 12p are brought into contact with the above stepped surfaces 12K, whereby the above stepped surfaces 12K serve as a guide to limit the moving directions of the above roller members 12p and 12p. Therefore, the above motor-side plate 11A and the intermediate plate 11B can be interconnected in such a manner that they can move in the direction A, and the intermediate plate 11B and the wheel-side plate 11C can be interconnected in such a manner that they can move in the direction B orthogonal to the above direction A.

Since the distance between the motor-side plate 11A and the wheel-side plate 11C can be made small by forming the above stepped portions 12m and 12n in the intermediate plate 11B, the thickness and weight of the flexible coupling 10 can be reduced.

Although guide holes may be formed in place of the above guide grooves 12q, the guide grooves 12q are preferably formed to reduce the size and weight of the flexible coupling 10.

Since the above roller members 12p do not need to be brought into contact with the intermediate plate 11B, the guide grooves 12q may be omitted.

The above stepped surfaces 12K may be made flat and guide members having the same contact surface as the above stepped surfaces 12K to be brought into contact with the above roller members 12p may be provided on the opposite side to the above stepped surfaces 12K of the above roller members 12p on the intermediate plate 11B to limit the moving directions of the roller members 12p. In this case, the number of parts increases though the side shape of the intermediate plate 11B is simplified. Therefore, it is preferred that the moving directions of the above roller members 12p and 12p should be limited by the above stepped surfaces 12K.

In the flexible coupling 10 of this embodiment, as the motor-side plate 11A and the intermediate plate 11B can move in the direction A by the above first slide members 12A, and the intermediate plate 11B and the wheel-side plate 11C can move in the direction B orthogonal to the above direction A by the above second slide members 12B as described above, the motor-side plate 11A and the wheel-side plate 11C can move in all directions. Therefore, even when the motor shaft and the wheel shaft become eccentric to each other due to the vibration of the motor when running on a bad road, the above eccentricity is absorbed by the first and second slide members 12A and 12B, thereby making it possible to transmit the drive force of the motor 3 to the wheel 2 smoothly.

According to Embodiment 1, since the in-wheel motor 3 and the wheel 2 are interconnected by the flexible coupling 10 in which the motor-side plate 11A and the intermediate plate 11B are interconnected by the first slide members 12A comprising the roller members 12p moving along the stepped surfaces 12K formed on the intermediate plate 11B in such a manner that they can move in the predetermined direction (direction A), and the intermediate plate 11b and the wheel-side plate 11C are interconnected by the second slide members 12B like the above first slide members 12A in such a manner that they can move in the direction (direction B) orthogonal to the above direction A, even when the motor shaft and the wheel shaft become eccentric to each other, the drive torque of the motor 3 can be transmitted to the wheel 2 without fail.

Since the flexible coupling 10 of the present invention has a small number of parts and is easily assembled, the assembly work efficiency of the in-wheel motor 3 can be enhanced and productivity can be improved.

### Embodiment 2

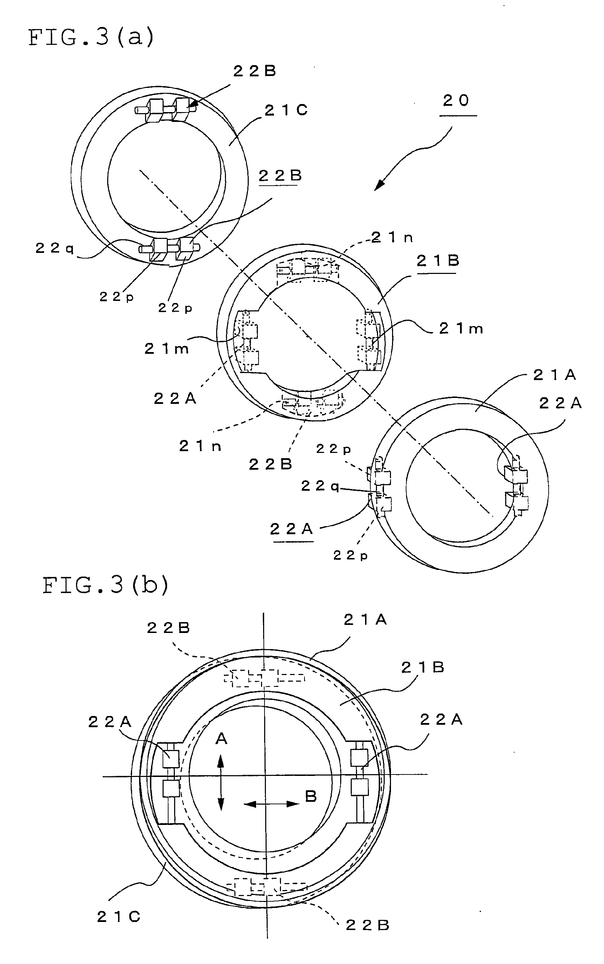

In the above Embodiment 1, the flexible coupling 10 in which the slide members 12A and 12B having the roller members 12p whose moving directions are orthogonal to each other are used to interconnect between the motor-side plate 11A and the intermediate plate 11B and between the intermediate plate 11B and the wheel-side plate 11C has been described. When a flexible coupling 20 in which slide members 22A and 22B, each consisting of linear bearings 22p and a rod 22q inserted into these linear bearings 22P and moving linearly, are used in place of the above slide members 12A and 12B to interconnect between a motor-side plate 21A and an intermediate plate 21B and between the intermediate plate 21B and a wheel-side plate 21C as shown in Figs. 3(a) and 3(b), the same effect can be obtained.

In the above flexible coupling 20, the linear bearings 22p and 22p are installed in a direction parallel to the direction A on the opposite sides in the circumferential direction of the motor-side plate 21A, cut-outs 21m and 21m are formed on the motor-side plate 21A side of the intermediate plate 21B, and both ends of the rod 22q to be inserted into the linear bearings 2p are fixed to both end surfaces of the above cut-outs 21m and 21m so that the motor-side plate 21A and the intermediate plate 21B are interconnected by the above slide members 22A. The linear bearings 22p and 22p are installed in a direction parallel to the direction B on the opposite sides in the direction B orthogonal to the direction A at positions 90° shifted from the positions of the above slide members 22A on the wheel-side plate 21C, cut-outs 21n and 21n are formed at positions 90° shifted from the above cut-outs 21m and 21m on the wheel-side plate 21C side of the intermediate plate 21B, and both ends of the rod 22q to be inserted into the above linear bearings 22p are fixed to both end surfaces of the above cut-outs 21n and 21n. Thereby, the motor-side plate 21A and the intermediate plate 21B can move in the direction A, and the wheel-side plate 21C and the intermediate plate 21B can move in the direction B in Figs. 3(a) and 3(b). Therefore, the motor-side plate 21A and the wheel-side plate 21C can move in all directions. Even when the motor shaft and the wheel shaft become eccentric to each other, the torque of the motor 3 can be transmitted to the wheel 2 smoothly.

In the above Embodiments 1 and 2, the wheel-side plate 11C or 21C is directly connected to the wheel 2. When the above wheel-side plate 11C or 21C is connected to the hub 4 connected to the wheel 4 at its rotary shaft, the same effect can be obtained.

### Embodiment 3

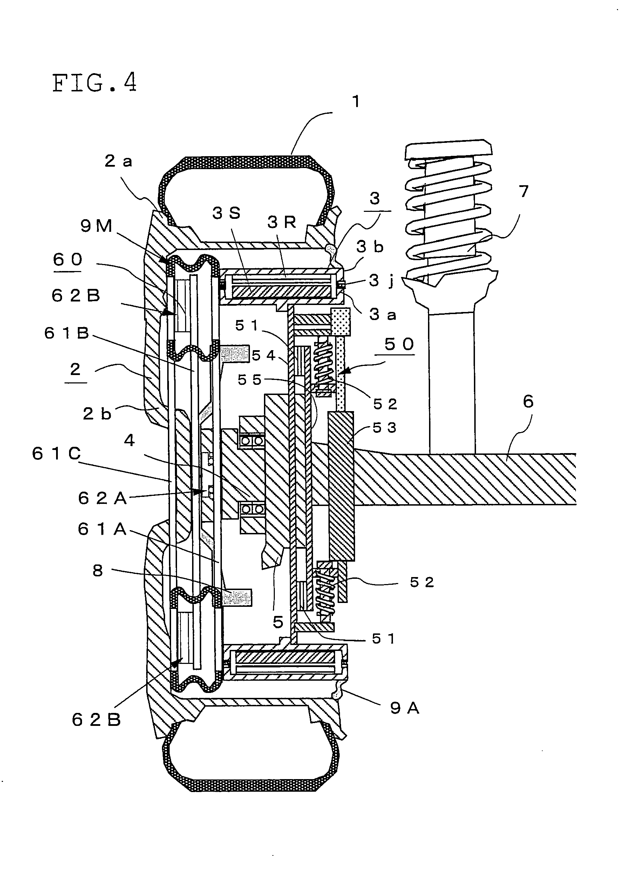

Fig. 4 shows the constitution of an in-wheel motor system according to Embodiment 3 of the present invention. In Fig. 4, reference numeral 1 denotes a tire, 2 a wheel consisting of a rim 2a and a wheel disk 2b, and 3 an outer rotor type in-wheel motor which comprises a stator 3S fixed to a non-rotating side case 3a arranged on the inner side in the radial direction and a rotor 3R fixed to a rotating side case 3b rotatably connected to the above non-rotating side case 3a through a bearing 3j and arranged on the outer side in the radial direction.

Numeral 4 denotes a hub connected to the wheel 2 at its rotary shaft, 5 a knuckle connected to an axle 6, 7 a suspension member composed of a shock absorber, 8 a brake unit composed of a brake disk mounted to the above hub 4, 9A the first annular dust boot shown in Fig. 7, and 9M an elastic dust boot having a wavy section according to the present invention.

50 denotes a buffer mechanism for elastically supporting the non-rotating side case 3a supporting the stator 3 to the above knuckle 5, comprising two plates 54 and 55 whose moving directions are limited to the vertical direction of the vehicle by direct-acting guides 51 and which are interconnected by springs 52 and a damper 53 moving in the vertical direction of the vehicle, and 60 a flexible coupling comprising a plurality of hollow disk-like plates 61A to 61C interconnected by direct-acting guides 62A and 62B which are arranged in such a manner that their moving directions become orthogonal to each other.

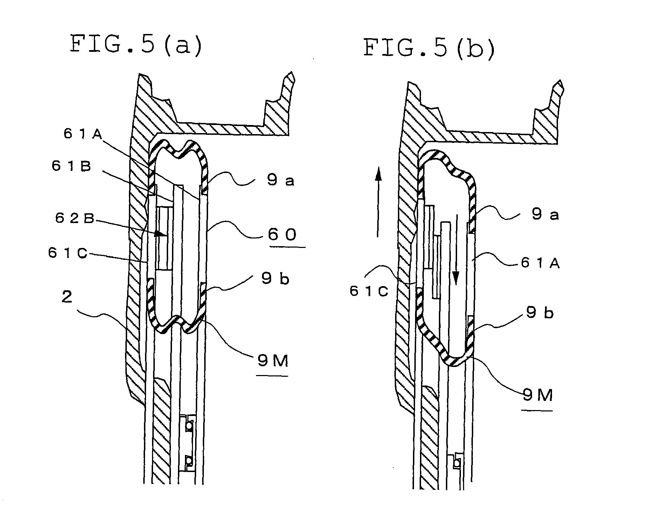

As shown in Figs. 5(a) and 5(b), the above dust boot 9M comprises an annular boot 9a for covering the outer sides of the direct-acting guides 62A and 62B arranged in the circumferential directions of the hollow disk-like plates 61A to 61C of the above flexible coupling 60 and an annular boot 9b for covering the inner sides of the direct-acting guides 62A and 62B, and the both annular boots 9a and 9b are interposed between the motor-side plate 61A and the wheel-side plate 61C, thereby making it possible to protect the direct-acting guides 62A and 62B from the outside. That is, as barriers are formed on the inner sides and the outer sides of the direct-acting guides 62A and 62B of the above flexible coupling 60 by the above dust boot 9M, the deformation of the above coupling portion by a stepping stone and the entry of dust into the direct-acting guides 62A and 62B can be prevented and the leakage of grease filled into the slide portions of the direct-acting guides 62A and 62B which are a slide mechanism to the outside can be prevented.

Since the above dust boot 9M is an elastic member having a wavy section, it expands and contracts along with the movement of the above flexible coupling 60. Therefore, unrequired force is not applied to the above flexible coupling 60, thereby making it possible to move the above flexible coupling 60 smoothly.

According to Embodiment 3, in the in-wheel motor system in which the non-rotating side case 3a of the motor 3 is connected to the knuckle 5 by the buffer mechanism 50 and the rotating side case 3a of the motor 3 is connected to the wheel 2 by the flexible coupling 60, the direct-acting guides 62A and 62B which are the slide mechanism of the above flexible coupling 60 are stored in the elastic dust boot 9M having a wavy section. Therefore, the entry of a stone or dust into the above direct-acting guides 62A and 62B can be prevented and the leakage of grease filled into the direct-acting guides 62A and 62B which are slide portions to the outside can be prevented, thereby making it possible to greatly improve the reliability of the in-wheel motor system.

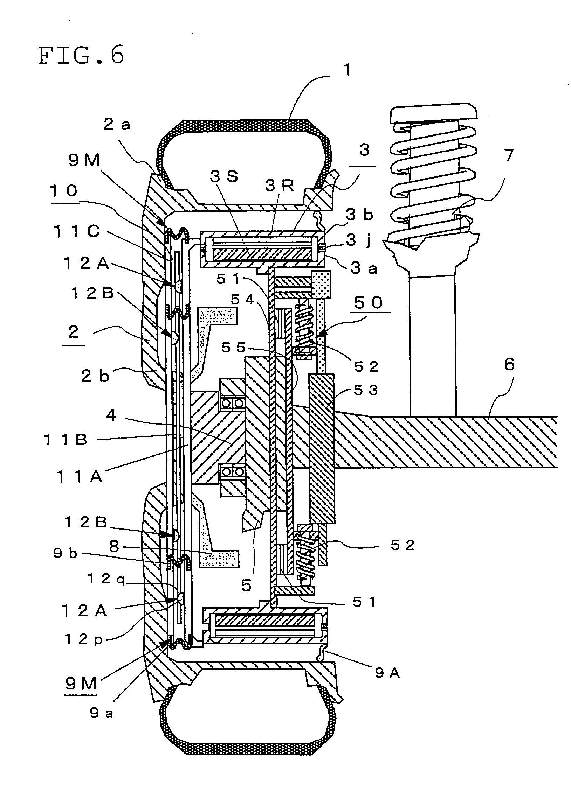

In the above Embodiment 3, the direct-acting guides 62A and 62B which are the slide mechanism of the conventional flexible coupling 60 are stored in the dust boot 9M. The present invention is not limited to this. For example, by applying the present invention to the above in-wheel motor systems of Embodiments 1 and 2, the entry of a stone or dust into the slide members 12A and 12B of the above flexible coupling 10 or the slide members 22A and 22B of the above flexible coupling 20 can be prevented and the leakage of grease from the above slide members 12A and 12B or 22A and 22B to the outside can be prevented. Stated more specifically, when the annular boot 9a for covering the outer sides of the slide members 12A and 12B, each consisting of the roller member 12p and the guide groove 12q, as the slide mechanism of the above flexible coupling 10 and the annular boot 9b for covering the inner sides of the above slide members 12A and 12B are installed between the motor-side plate 11A and the wheel-side plate 11C and the above slide members 12A and 12B are stored in the elastic dust boot 9M having a wavy section which comprises the above annular boots 9a and 9b as shown in Fig. 6, the entry of a stone or dust into the above slide members 12A and 12B can be prevented and the leakage of grease filled into the roller members 12p and the guide grooves 12q which are the slide portions of the above slide members 12A and 12B to the outside can be prevented, thereby making it possible to greatly improve the reliability of the in-wheel motor system.

Even when the slide members 22A and 2B, each consisting of the linear bearings 22p and the rod 22q, are used in place of the above slide members 12A and 12B, if the above slide members 22A and 22B are stored in the elastic dust boot 9M, the same effect can be obtained.

### Industrial Feasibility

As having been described above, according to the present invention, since the rotor of the in-wheel motor and the wheel or the hub are interconnected by the flexible coupling which has a small number of parts and is easily assembled, productivity can be improved and the in-wheel motor can be manufactured at a low cost.

Since the slide mechanism of the coupling member is stored in an elastic annular dust boot, the entry of dust and water into the slide mechanism and the diffusion of grease filled into the slide portions of the above slide mechanism to the outside can be prevented effectively.

## Claims

1. An in-wheel motor system having a hollow direct drive motor which is provided in a wheel and whose stator side is supported to a part around the wheel of a vehicle by elastic bodies and/or an attenuation mechanism, wherein
a motor rotor and a wheel or a hub are interconnected by a coupling mechanism which comprises a wheel-side plate connected to the wheel or hub, a motor-side plate connected to the rotating side case of the motor, an intermediate plate interposed between these two plates, and first and second slide members for interconnecting between the wheel-side plate and the intermediate plate and between the intermediate plate and the motor-side plate, each having roller members whose moving directions are limited by guide portions, and arranged in such a manner that their moving directions are orthogonal to each other.

2. The in-wheel motor system according to claim 1, wherein contact portions which extend in the moving directions of the roller members and are brought into contact with the side faces of the roller members are provided on the intermediate plate to limit the moving directions of the roller members.

3. The in-wheel motor system according to claim 1 or 2, comprising an elastic annular dust boot for storing the first and second slide members.

4. An in-wheel motor system having a hollow direct drive motor which is provided in a wheel and whose stator side is supported to a part around the wheel of a vehicle by elastic bodies and/or an attenuation mechanism, wherein
a motor rotor and a wheel or a hub are interconnected by a coupling mechanism which comprises a wheel-side plate connected to the wheel or hub, a motor-side plate connected to the rotating side case of the motor, an intermediate plate interposed between these two plates, and first and second slide members for interconnecting between the wheel-side plate and the intermediate plate and between the intermediate plate and the motor-side plate, each consisting of linear bearings and a rod, and arranged in such a manner that their moving directions are orthogonal to each other.

5. The in-wheel motor system according to claim 4, comprising an elastic annular dust boot for storing the first and second slide members.

6. An in-wheel motor system having a hollow direct drive motor which is provided in a wheel and whose stator side is supported to a part around the wheel of a vehicle by elastic bodies and/or an attenuation mechanism and a coupling member having a slide mechanism for connecting the rotor of the motor to the wheel or hub, wherein
an elastic annular dust boot for storing the slide mechanism is provided.
